# EUROPEAN PATENT SPECIFICATION

(11) **EP 3 711 979 B1**
(45) Date of publication and mention of the grant of the patent: **03.03.2021**
(21) Application number: 20162923.5
(22) Date of filing: 13.03.2020
(51) Int. Cl.: B60C 9/22

(54) **MOTORCYCLE TIRE**
MOTORRADREIFEN
PNEUMATIQUE DE MOTO

(30) Priority: 22.03.2019 JP 2019054348
(43) Date of publication of application: 23.09.2020
(73) Proprietor: SUMITOMO RUBBER INDUSTRIES, LTD., Chuo-ku Kobe-shi Hyogo 651-0072 (JP)
(72) Inventor: OTANI, Masafumi, Chuo-ku, Kobe-shi, Hyogo 651-0072 (JP); KONO, Kyosuke, Chuo-ku, Kobe-shi, Hyogo 651-0072 (JP)
(74) Representative: TBK

(56) References cited:
- EP-A1- 0 950 546
- FR-A1- 2 939 719
- FR-A1- 2 939 723
- US-A1- 2018 056 721

## Description

### BACKGROUND OF THE INVENTION

### Field of the Invention

The present invention relates to a motorcycle tire.

### Description of the Background Art

JP 4 107 689 B discloses a motorcycle tire in which a tread portion has a carcass, a tread band in which a tread pattern is formed, and a belt structure disposed between the carcass and the tread band. The belt structure is formed from a ribbon that includes a plurality of cord coils.

In general, in such a motorcycle tire, the tread portion is curved into an arc shape that projects outward in the tire radial direction, and difference between the tire circumferential lengths at both ends in the tire axial direction in the unit length is greater on the shoulder side of the belt structure than the crown side of the belt structure. That is, in the ribbon, difference between a tire circumferential length over which the cord coil is disposed on the outer side in the tire axial direction and a tire circumferential length over which the cord coil is disposed on the inner side in the tire axial direction is greater on the shoulder side than the crown side.

Meanwhile, in general, the lengths (circumferential lengths) of the cord coils in the ribbon are the same when the cord coils are wound. Therefore, difference between a holding force of the cord coils on the inner side in the tire axial direction in the ribbon, and a holding force of the cord coils on the outer side in the tire axial direction in the ribbon is increased on the shoulder side of the tread portion. Thus, on the shoulder side, the cord coils in the ribbon have holding forces which are greatly different from each other. Therefore, a problem arises that the stiffness of the belt structure cannot be made high, and excellent handing performance cannot be exhibited.

EP 0 950 546 A1 discloses a tire for two-wheeled vehicles having a transverse curvature coefficient with a value of not less than 0.15, comprising a torus-shaped carcass having structural means which allow improvements in the handling of the vehicle, while leaving unchanged the other performance characteristics, in particular the comfort. These structural means consist in at least one ply of a rubberized fabric provided with textile cords having a count of between 420/2 and 840/2 dtex and a modulus of elasticity of between 100,000 MPa/cm and 200,000 MPa/cm. Preferably the carcass comprises a pair of these rubberized fabric plies reinforced with PEN cords.

FR 2 939 719 A1 and FR 2 939 723 A1 relate to similar tires.

The present invention has been made in view of the aforementioned problem, and a main object of the present invention is to provide a motorcycle tire which can allow improvement of handling performance.

### SUMMARY OF THE INVENTION

The present invention is directed to a motorcycle tire which includes a tread portion configured to be curved into an arc shape that projects outward in a tire radial direction. The tire includes a carcass having a toroidal shape; and a tread reinforcing layer disposed outward of the carcass in the tire radial direction and inward of the tread portion in the tire radial direction. The tread reinforcing layer includes a crown region and a pair of shoulder regions on both outer sides of the crown region, and the tread reinforcing layer is formed by a rubber-coated cord strip being helically wound. The rubber-coated cord strip is formed by a plurality of reinforcing cords aligned with each other being covered with topping rubber. A distance between the reinforcing cords which are adjacent to each other in the rubber-coated cord strip wound in each of the shoulder regions is less than a distance between the reinforcing cords which are adjacent to each other in the rubber-coated cord strip wound in the crown region. Shoulder ends that are the number of the reinforcing cords per unit periphery length in each of the shoulder regions are not less than crown ends that are the number of reinforcing cords per unit periphery length in the crown region.

In the motorcycle tire according to the present invention, the shoulder ends are 100% to 150% of the crown ends.

In the motorcycle tire according to the present invention, a distance between the rubber-coated cord strips which are adjacent to each other in a tire axial direction in the crown region is greater than a distance between the rubber-coated cord strips which are adjacent to each other in the tire axial direction in each of the shoulder regions.

In the motorcycle tire according to the present invention, the shoulder ends are preferably greater than the crown ends.

In the motorcycle tire according to the present invention, a distance between the rubber-coated cord strips adjacent to each other is preferably reduced outward in the tire axial direction.

In the motorcycle tire according to the present invention, the shoulder ends are preferably the same as the crown ends.

In the motorcycle tire according to the present invention, a distance between the reinforcing cords adjacent to each other in the rubber-coated cord strip is preferably reduced such that the closer the rubber-coated cord strip is to an outer side in the tire axial direction, the less the distance in the rubber-coated cord strip becomes.

In the motorcycle tire according to the present invention, the distance between the reinforcing cords which are adjacent to each other in the rubber-coated cord strip wound in each of the shoulder regions is preferably not greater than 90% of the distance between the reinforcing cords which are adjacent to each other in the rubber-coated cord strip wound in the crown region.

In the motorcycle tire according to the present invention, the crown region preferably extends, across a tire equator located at a center of the crown region, with a length that is 30% of a tread periphery length.

In the motorcycle tire according to the present invention, the tread portion is curved into an arc shape that projects outward in the tire radial direction, and the tread portion has the tread reinforcing layer. The tread reinforcing layer includes the crown region and the shoulder regions disposed outward of the crown region, and the tread reinforcing layer is formed by the rubber-coated cord strip being wound. The rubber-coated cord strip is formed by a plurality of reinforcing cords aligned with each other being covered with topping rubber.

In the motorcycle tire according to the present invention, a distance between the reinforcing cords which are adjacent to each other in the rubber-coated cord strip wound in each of the shoulder regions is less than a distance between the reinforcing cords which are adjacent to each other in the rubber-coated cord strip wound in the crown region. Thus, in the shoulder regions, difference between the tire circumferential lengths over which the reinforcing cords are disposed in the rubber-coated cord strip is reduced. Therefore, difference between holding forces of the reinforcing cords in the rubber-coated cord strip is prevented from increasing, and stiffness is high in the shoulder regions.

In the motorcycle tire according to the present invention, the shoulder ends are not less than the crown ends. Stiffness in the shoulder region having such a structure is not less than stiffness in the crown region, whereby high traction performance is exhibited during turning. Furthermore, stiffness in the crown region is appropriately reduced, whereby stability in straight running is assured and tilting of a vehicle body from an upright state is facilitated. Therefore, the motorcycle tire according to the present invention provides excellent handling performance.

### BRIEF DESCRIPTION OF THE DRAWINGS

FIG. 1 is a tire meridian cross-sectional view of a motorcycle tire according to one embodiment of the present invention;
FIG. 2 is a perspective view of a reinforcing cord;
FIG. 3(a) is an enlarged view of a crown region shown in FIG. 1;
FIG. 3(b) is an enlarged view of a shoulder region shown in FIG 1;
FIG. 4(a) is a cross-sectional view of a rubber-coated cord strip according to another embodiment;
FIG. 4(b) is a cross-sectional view of a rubber-coated cord strip according to still another embodiment;
FIG. 5 is a schematic diagram illustrating a device for forming a green tire;
FIG. 6 is a partially enlarged view of an upper portion of the device shown in FIG 5;
FIG. 7 is a cross-sectional view of a part of a vulcanization mold;
FIG. 8 is a schematic diagram illustrating a portion, near a tread end, of the tire having been vulcanized;
FIG. 9 is a schematic diagram illustrating a device for forming a green tire according to another embodiment; and
FIG. 10 is a partial cross-sectional view of a portion of the device shown in FIG. 9.

### DESCRIPTION OF THE PREFERRED EMBODIMENTS

An embodiment of the present invention will be described below with reference to the drawings.

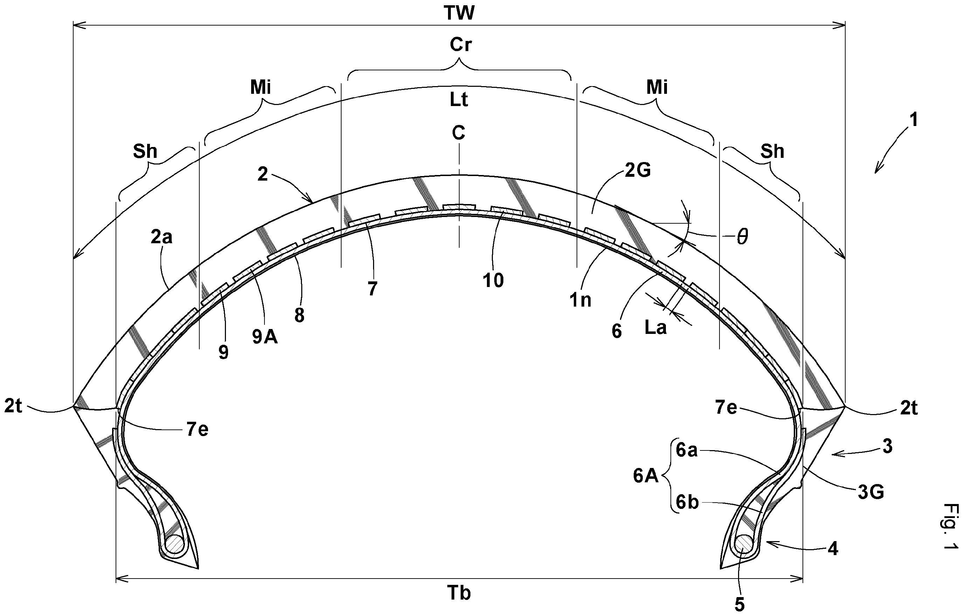

FIG. 1 is a tire meridian cross-sectional view of a motorcycle tire (hereinafter, may be simply referred to as "tire") 1 in a normal state according to one embodiment of the present invention. The tire 1 shown in FIG. 1 is preferably mounted to, for example, a motorcycle called a naked motorbike. The present invention is not limited thereto, and the tire 1 can be used for various motorcycles.

The "normal state" represents a state in which the tire 1 is mounted on a normal rim (not shown) and inflated with air to a normal internal pressure, and no load is applied to the tire 1. In the description herein, unless otherwise specified, dimensions of components of the tire 1 are represented as values measured in the normal state.

The "normal rim" represents a rim that is defined by a standard, in a standard system including the standard with which the tire 1 complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire 1 complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

In the tire 1 of the present embodiment, a tread portion 2 is curved into an arc shape that projects outward in the tire radial direction. The tire 1 having such a structure can allow a sufficient contact area to be obtained also in turning at which the camber angle is great. A distance, in the tire axial direction, between tread ends 2t and 2t of the tread portion 2 is a tread width TW. In the present embodiment, the tire 1 is formed such that the tread width TW is the greatest width in the tire axial direction

In the tire 1 of the present embodiment, a carcass 6 having a toroidal shape and a tread reinforcing layer 7 disposed outward of the carcass 6 in the tire radial direction are provided. The tire 1 includes, for example, tread rubber 2G for forming a tread surface 2a of the tread portion 2, sidewall rubber 3G for forming outer surfaces of sidewall portions 3, and inner liner rubber 8 for forming an inner cavity surface In of the tire 1.

In the present embodiment, the carcass 6 is formed from one carcass ply 6A. The carcass ply 6A includes, for example, a body portion 6a that extends from the tread portion 2 through the sidewall portions 3 to bead cores 5 of bead portions 4, and turned-up portions 6b which are continuous with the body portion 6a and are turned up around the bead cores 5.

The tread reinforcing layer 7 includes at least one ply. In the present embodiment, the tread reinforcing layer 7 is formed from a belt layer 9 that has one belt ply 9A. In the tread reinforcing layer 7 of the present embodiment, both outer ends 7e and 7e in the tire axial direction are positioned near the tread ends 2t. In the tread reinforcing layer 7, a length Tb, in the tire axial direction, between the outer ends 7e and 7e is preferably 75% to 95% of the tread width TW. The tread reinforcing layer 7 may have the belt layer 9 and a band layer (not shown) disposed outward of the belt layer 9 in the tire radial direction.

The tread reinforcing layer 7 has, for example, a crown region Cr, a pair of middle regions Mi and Mi, and a pair of shoulder regions Sh and Sh. The crown region Cr is, for example, a region which includes the tire equator C and at which the tire 1 contacts with the ground during straight running. In the present embodiment, the crown region Cr extends, across the tire equator C located at the center of the crown region Cr, with a length that is 30% of a tread periphery length Lt. In the present embodiment, each shoulder region Sh is a region which is positioned inward of the outer end 7e in the tire axial direction and at which the tire 1 contacts with the ground during turning at which the camber angle is maximum. For example, the shoulder region Sh extends inward from the tread end 2t in the tire axial direction with a length that is 15% of the tread periphery length Lt. In the present embodiment, each middle region Mi is formed between the crown region Cr and the shoulder region Sh. The tread periphery length Lt is a length between the tread ends 2t and 2t measured along the shape of the tread surface 2a on the tire meridian cross-section in the normal state.

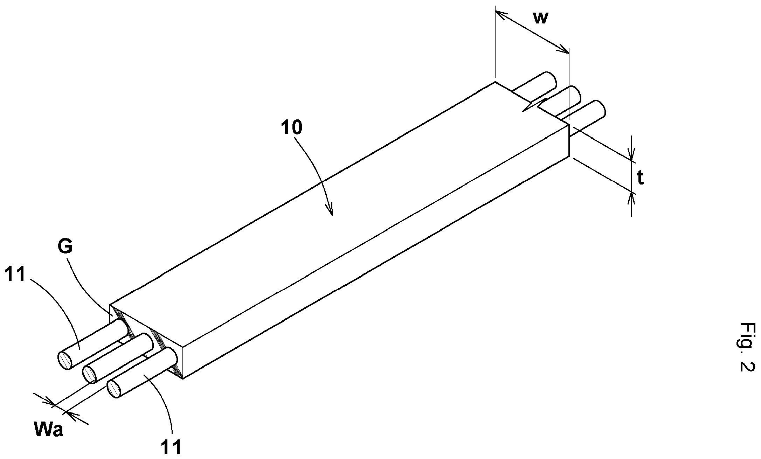

The tread reinforcing layer 7 is formed by a rubber-coated cord strip 10 being helically wound. FIG. 2 is a perspective view of the rubber-coated cord strip 10. As shown in FIG. 2, the rubber-coated cord strip 10 is formed by a plurality of reinforcing cords 11 aligned with each other being covered with topping rubber G. For the reinforcing cords 11, for example, organic fiber cords formed from nylon, polyester, rayon, an aromatic polyamide, or the like, and metal cords such as a steel cord are used. A width w of the rubber-coated cord strip 10 is preferably about 2.5 to 6.0 mm and the thickness t of the rubber-coated cord strip 10 is preferably about 1.0 to 3.0 mm. However, the present invention is not limited thereto. For example, the number of the reinforcing cords 11 disposed in the rubber-coated cord strip 10 is preferably about 2 to 6.

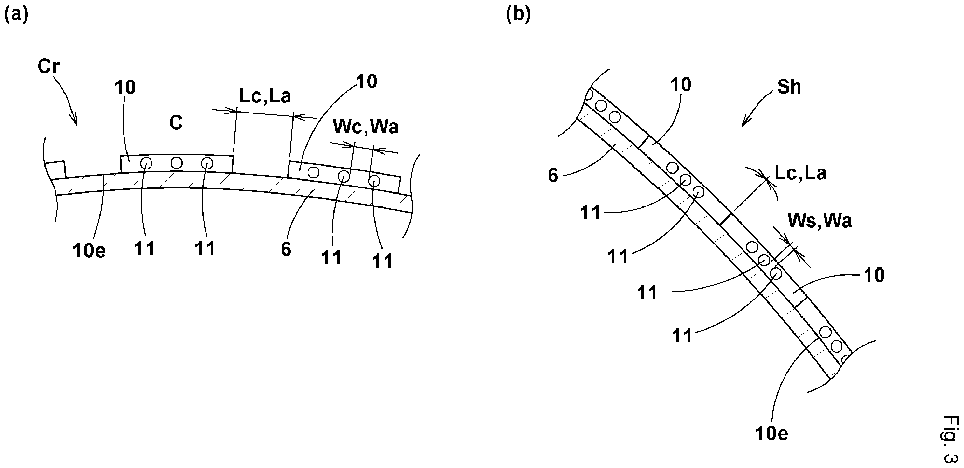

FIG. 3(a) is an enlarged view of the crown region Cr shown in FIG. 1 and FIG. 3(b) is an enlarged view of the shoulder region Sh shown in FIG. 1. As shown in FIG. 3, in the present embodiment, a distance Ws between the reinforcing cords 11 and 11 which are adjacent to each other in the rubber-coated cord strip 10 wound in the shoulder region Sh is less than a distance Wc between the reinforcing cords 11 and 11 which are adjacent to each other in the rubber-coated cord strip 10 wound in the crown region Cr. Thus, in the shoulder region Sh, difference between the tire circumferential lengths over which the reinforcing cords 11 are disposed in the rubber-coated cord strip 10 is reduced. Therefore, difference between holding forces of the reinforcing cords 11 in the rubber-coated cord strip 10 is prevented from increasing and the shoulder regions Sh have high stiffness. Accordingly, the tire 1 of the present embodiment exhibits excellent handling performance.

In order to effectively exhibit the above-described effect, the distance Ws between the reinforcing cords 11 in the shoulder region Sh is preferably not greater than 90% of the distance Wc between the reinforcing cords 11 wound in the crown region Cr. When the distance Ws between the reinforcing cords 11 in the shoulder region Sh is excessively less than the distance Wc between the reinforcing cords 11 wound in the crown region Cr, damage may occur due to the reinforcing cords 11 coming into contact with each other. Therefore, the distance Ws between the reinforcing cords 11 in the shoulder region Sh is preferably not less than 60% of the distance Wc between the reinforcing cords 11 wound in the crown region Cr. Preferably, the distance Wc in the crown region Cr is, but is not particularly limited to, 0.8 to 2.0 mm. The distance Ws in the shoulder region Sh is preferably 0.5 to 1.6 mm. A distance Wm in the middle region Mi is preferably 0.6 to 1.8 mm. Each distance is the shortest distance between the reinforcing cords 11 and 11 adjacent to each other.

In the motorcycle tire 1, an angle 0 (shown in FIG. 1) of the tread surface 2a of the tread portion 2 relative to the tire axial direction is gradually increased from the tire equator C toward the tread end 2t. Therefore, in general, an angle of each rubber-coated cord strip 10 of the tread reinforcing layer 7 relative to the tire axial direction also tends to be increased according to the rubber-coated cord strip 10 becoming closer to the outer side in the tire axial direction. Accordingly, the closer the rubber-coated cord strip 10 is to the outer side in the tire axial direction, the less a distance Wa between the reinforcing cords 11 and 11 adjacent to each other in the rubber-coated cord strip 10 becomes, whereby difference among holding forces of the reinforcing cords 11 in each rubber-coated cord strip 10 is reduced to improve handling performance.

In the tire 1 of the present embodiment, shoulder ends Es are not less than crown ends Ec. Thus, stiffness in the shoulder region Sh is not less than stiffness in the crown region Cr, whereby high traction performance is exhibited during turning. Furthermore, stiffness in the crown region Cr is appropriately reduced, whereby stability in straight running is assured and tilting of a vehicle body from an upright state is facilitated. Therefore, the tire 1 of the present embodiment provides excellent handling performance. The shoulder ends Es represent the number of the reinforcing cords 11 per unit periphery length in the shoulder region Sh. The crown ends Ec represent the number of the reinforcing cords 11 per unit periphery length in the crown region Cr. In the description herein, the "periphery length" represents a length measured along the shape (end edge 10e on the inner side, in the tire radial direction, of the rubber-coated cord strip 10) of each of the regions Sh and Cr on the tire meridian cross-section in the normal state.

In order to effectively exhibit the above-described effect, the shoulder ends Es are preferably greater than the crown ends Ec.

When the shoulder ends Es are excessively greater than the crown ends Ec, the stiffness in the shoulder region Sh becomes excessively high, and transient characteristics between straight running and turning are deteriorated and handling performance may be degraded. Furthermore, the stiffness in the crown region Cr becomes excessively low, whereby straight running may not be stable. For example, during turning, when difference in stiffness between the crown region Cr and the shoulder region Sh is great, rolling transient characteristics that represent responsiveness of ground contact feeling during rolling of the vehicle are deteriorated. Therefore, the shoulder ends Es are preferably 100% to 150% of the crown ends Ec.

Even when the shoulder ends Es and the crown ends Ec are the same, difference between holding forces of the reinforcing cords 11 is small in the shoulder region Sh. Therefore, high stiffness is maintained in the shoulder regions Sh.

For example, preferably, the shoulder ends Es are, but are not particularly limited to, 30 to 45 per periphery length of 50 mm in the shoulder region Sh. The crown ends Ec are, for example, preferably 30 to 40 per periphery length of 50 mm in the crown region Cr. For example, preferably, middle ends Em are, but are not particularly limited to, 30 to 40 per periphery length of 50 mm in the middle region Mi.

A distance Lc between the rubber-coated cord strips 10 and 10 which are adjacent to each other in the tire axial direction in the crown region Cr is preferably greater than a distance Ls between the rubber-coated cord strips 10 and 10 which are adjacent to each other in the tire axial direction in the shoulder region Sh. Thus, the shoulder ends Es can be not less than the crown ends Ec, and, therefore, the above-described effect is exhibited. The tire 1 having such a structure can allow the mass of the crown region Cr to be reduced while the stiffness in the shoulder region Sh is maintained high.

A distance La (shown in FIG. 1) between the rubber-coated cord strips 10 and 10 adjacent to each other is preferably reduced outward in the tire axial direction. Thus, the above-described effect is effectively exhibited

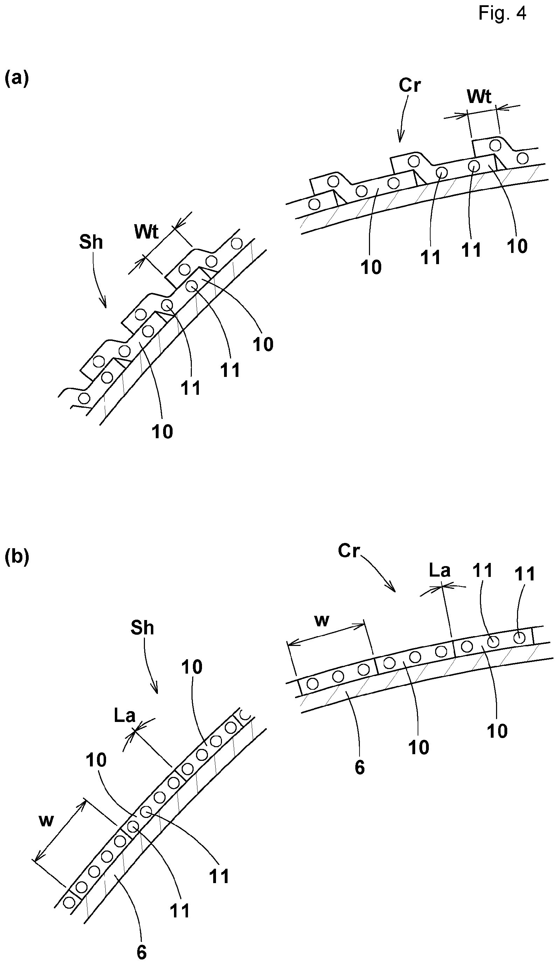

FIG. 4(a) is a cross-sectional view of the rubber-coated cord strip 10 according to another embodiment. As shown in FIG. 4(a), in the present embodiment, the rubber-coated cord strips 10 adjacent to each other in the tire axial direction overlap each other in the tire radial direction. In the present embodiment, a periphery overlapping length Wt, in the shoulder region Sh, over which the rubber-coated cord strips 10 overlap each other is made greater than a periphery overlapping length Wt, in the crown region Cr, over which the rubber-coated cord strips 10 overlap each other. Also in such a manner, the shoulder ends Es can be made greater than the crown ends Ec. The width w of the rubber-coated cord strip 10 is the same in both the regions Sh and Cr.

FIG. 4(b) is a cross-sectional view of the rubber-coated cord strip 10 according to still another embodiment. As shown in FIG. 4(b), in the present embodiment, the number of the reinforcing cords 11 of the rubber-coated cord strip 10 in the shoulder region Sh is made greater than the number of the reinforcing cords 11 of the rubber-coated cord strip 10 in the crown region Cr. Also in such a manner, the shoulder ends Es can be made greater than the crown ends Ec. The width w of the rubber-coated cord strip 10 is the same in both the regions Sh and Cr.

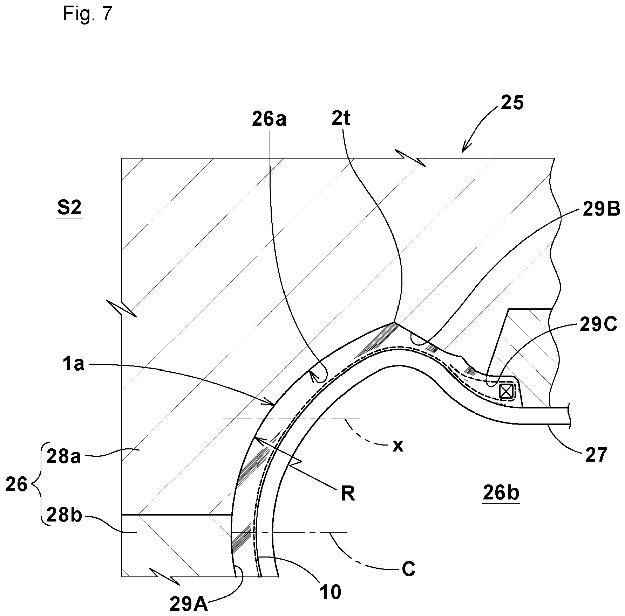

Next, a production method for producing the tire 1 having such a structure will be described. The production method for producing the tire 1 includes, for example, a forming step S1 of forming a green tire 1a (shown in FIG. 7), and a vulcanizing step S2 of vulcanizing the green tire 1a. The tire 1 is obtained by vulcanizing the green tire 1a.

The forming step S1 includes, for example, a first step of forming a green tire base body It, a second step of forming the tread reinforcing layer 7 on the outer side of the green tire base body It, and a third step of forming the tread rubber 2G on the outer sides of the green tire base body It and the tread reinforcing layer 7.

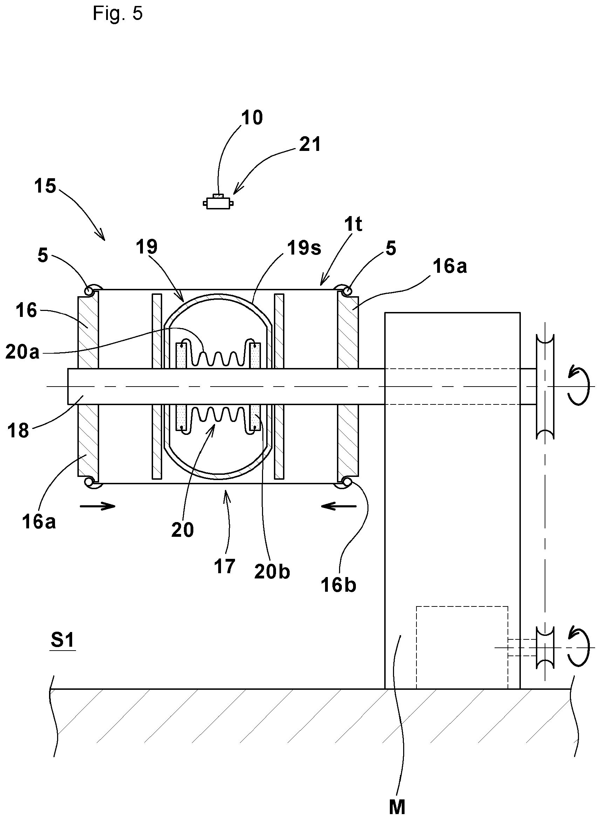

In the present embodiment, in the first step, a not-illustrated forming drum having a known structure is used. In the first step, for example, the carcass 6 (shown in FIG. 1) having a cylindrical shape is formed on the forming drum, and the bead cores 5 are attached to both end portions of the carcass 6. Furthermore, in the first step, the tire components such as the inner liner rubber 8 and the sidewall rubber 3G are attached to the outer side of the carcass 6 as appropriate, to form the green tire base body It (shown in FIG. 5) having a cylindrical shape.

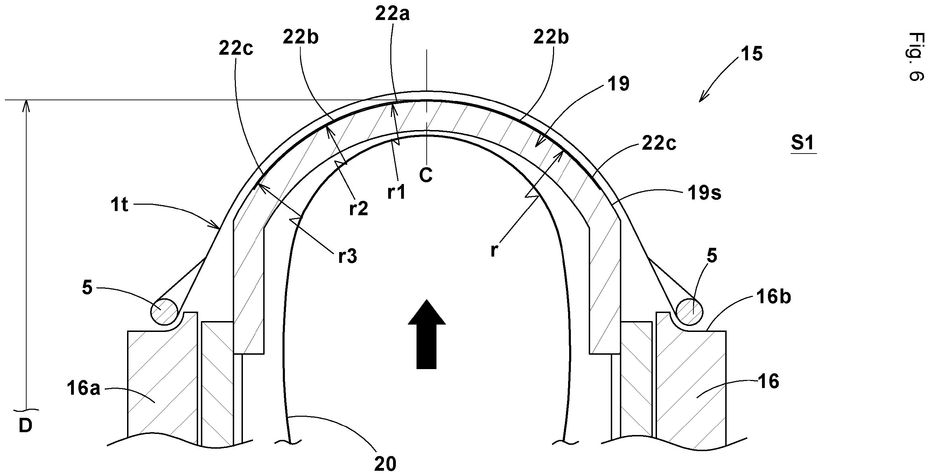

FIG. 5 is a schematic diagram illustrating a shaping drum 15 used in the second step of the present embodiment. FIG. 6 is an enlarged view of the shaping drum 15. As shown in FIG. 5 and FIG. 6, the green tire base body It formed in the first step is disposed on the shaping drum 15 of the present embodiment. The green tire base body It is moved and placed onto the shaping drum 15 by, for example, a not-illustrated transfer having a known structure.

In the present embodiment, the shaping drum 15 includes a holding means 16 for holing the green tire base body It, a shaping means 17 for expanding the green tire base body It into a toroidal shape, and a support shaft 18 for supporting the holding means 16 and the shaping means 17.

In the present embodiment, the support shaft 18 is rotatably held by a base M. The support shaft 18 is, for example, rotated by a motor, disposed in the base M, which has a known structure.

In the present embodiment, the holding means 16 includes bead lock rings 16a that are spaced from each other in the axial direction. For example, the bead lock rings 16a are movable axially inward and outward over a short distance, and are supported by the support shaft 18. Seat portions 16b for holding the bead cores 5 of the green tire base body It are disposed at radially outer end portions of the bead lock rings 16a.

In the present embodiment, the shaping means 17 includes a profile deck 19 in which an outer circumferential surface 19s approximates to the tread surface 2a of the tread portion 2, and a diameter enlarging and reducing means 20 for enlarging and reducing the diameter of the profile deck 19.

The profile deck 19 includes, for example, a plurality of segment-like members that are dividable in the circumferential direction. The segment-like members are pressed by the diameter enlarging and reducing means 20 and moved in the tire radial direction. FIG. 6 shows the profile deck 19 in a diameter enlarged state. FIG. 5 shows the profile deck 19 in a diameter reduced state.

In the present embodiment, the outer circumferential surface 19s of the profile deck 19 includes a first portion 22a at which the crown region Cr of the tread reinforcing layer 7 is disposed, second portions 22b at which the middle regions Mi are disposed, and third portions 22c at which the shoulder regions Sh are disposed.

For example, the outer circumferential surface 19s is curved into an arc shape that projects outward in the radial direction. Specifically, the outer circumferential surface 19s is preferably shaped such that, in the vulcanizing step S2, a stretch of the reinforcing cord 11 is gradually increased outward in the tire axial direction from the tire equator C. The stretch represents difference (distance in the tire radial direction) between a height position, in the tire radial direction, of the reinforcing cord 11 on the outer circumferential surface 19s in the second step and a height position, in the tire radial direction, of the same reinforcing cord 11 after the vulcanization. The stretch of the reinforcing cord 11 that is closest to the tire equator C is preferably not greater than 2.0% of the outer diameter, on the tire equator C, of the tire 1, more preferably not greater than 1.0% thereof, and even more preferably not greater than 0.5% thereof. The stretch of the reinforcing cord 11 that is closest to the outer end 7e of the tread reinforcing layer 7 is preferably not greater than 3.0% of the outer diameter, at the outer end 7e, of the tire 1, more preferably not greater than 2.0% thereof, and even more preferably not greater than 1.5% thereof.

More specifically, the outer circumferential surface 19s is preferably formed from a plurality of arcs in which a curvature radius is increased outward in the tire axial direction from the position corresponding to the tire equator C. In the first portion 22a, preferably, a curvature radius r1 of the arc is, but is not particularly limited to, 40% to 50% of the tread width TW. In each second portion 22b, a curvature radius r2 of the arc is preferably 45% to 65% of the tread width TW. Furthermore, in each third portion 22c, a curvature radius r3 of the arc is preferably 60% to 100% of the tread width TW.

In the present embodiment, the diameter enlarging and reducing means 20 has a known structure that includes an air bag 20a, and a holding portion 20b for holding the air bag 20a. The air bag 20a is formed from expandable and contractable rubber so as to have a cylindrical shape, and is expanded outward in the tire radial direction by pressurized gas having been introduced into the air bag 20a, to enlarge the diameter of the profile deck 19. The holding portion 20b is, for example, a plate-like member fixed to the support shaft 18. The diameter enlarging and reducing means 20 is not limited thereto, and may be implemented by a cylinder mechanism, a link mechanism, or the like.

In the second step, the green tire base body It is firstly expanded between the bead cores 5 and 5 so as to have a toroidal shape. Specifically, while both the bead lock rings 16a that hold the bead cores 5 are moved so as to approach each other, the air bag 20a is expanded to enlarge the diameter of the profile deck 19, whereby the green tire base body It is pushed upward. Thus, the green tire base body It is curved, along the outer circumferential surface 19s of the profile deck 19, into an arc shape that projects outward in the tire radial direction.

Next, the rubber-coated cord strip 10 is helically wound on the green tire base body It. The rubber-coated cord strip 10 is continuously fed onto the outer circumferential surface 19s of the profile deck 19 by, for example, an applicator 21 having a known structure, and is wound on the green tire base body It. Thus, the tread reinforcing layer 7 of the green tire 1a is formed.

In the present embodiment, the tread reinforcing layer 7 is formed from one rubber-coated cord strip 10. At this time, the distance Wa (shown in FIG. 2) between the reinforcing cords 11 is the same along the longitudinal direction in the rubber-coated cord strip 10. The tread reinforcing layer 7 may be formed from a plurality of kinds of the rubber-coated cord strips 10 which are different in the distance Wa between the reinforcing cords 11. For example, the tread reinforcing layer 7 may be wound, in the middle region Mi, by the rubber-coated cord strip 10 in which the distance Wa between the reinforcing cords 11 is less than the distance Wa in the crown region Cr, and may be wound, in the shoulder region Sh, by the rubber-coated cord strip 10 in which the distance Wa between the reinforcing cords 11 is less than the distance Wa in the middle region Mi. In this case, three kinds of the rubber-coated cord strips 10 which are different in the distance Wa between the reinforcing cords 11 are used. Furthermore, in the present invention, four or more kinds of the rubber-coated cord strips 10 that are different in the distance Wa between the reinforcing cords 11 may be used. All the rubber-coated cord strips 10 have the same width w.

At this time, for example, the rubber-coated cord strip 10 is wound such that the distance La (shown in FIG. 1) between the rubber-coated cord strips 10 and 10 adjacent to each other in the tire axial direction is reduced outward in the tire axial direction from the tire equator C. In the tire 1 having such a structure, the shoulder ends Es become greater than the crown ends Ec. Thus, transient characteristics from straight running to turning, and stiffness feeling during turning are improved to improve handling performance. As shown in FIG. 4(a), the rubber-coated cord strips 10 and 10 adjacent to each other in the tire axial direction may be stacked in the tire radial direction, and the periphery overlapping length Wt in the shoulder region Sh may be greater than the periphery overlapping length Wt in the crown region Cr. The periphery overlapping length Wt may be gradually increased outward in the tire axial direction from the tire equator C. As shown in FIG. 4(b), the rubber-coated cord strip 10 may be wound such that the distance La is constant over the inner side and the outer side in the tire axial direction.

Next, the third step is performed. In the third step of the present embodiment, for example, a tread rubber member (not shown) which is formed by extrusion, has a trapezoidal cross-section, has a large width, and is band-shaped, is adhered onto the tread reinforcing layer 7 to form the tread rubber 2G (shown in FIG. 1). The tread rubber member is wound once in the circumferential direction on the outer circumferential surface of the green tire base body It so as to form a cylindrical shape, and is thereafter curved along the green tire base body It by a stitch roller having a known structure. Thus, the green tire 1a is formed.

Next, the vulcanizing step S2 is performed. FIG. 7 is a partial cross-sectional view of a vulcanization mold 25 used in the vulcanizing step S2. As shown in FIG. 7, in the present embodiment, the vulcanization mold 25 has, for example, a vulcanization mold body 26 having a tire forming surface 26a for forming an outer surface of the tire 1, and a bladder 27 for applying pressure to the green tire 1a attached to the tire forming surface 26a. The green tire 1a is transferred into the vulcanization mold 25 by a transfer device (not shown) having a known structure.

The vulcanization mold body 26 includes, for example, an upper mold 28a and a lower mold 28b that are separable in the tire axial direction. The vulcanization mold body 26 has a cavity 26b thereinside, and the mold inner surface that defines the cavity 26b forms the tire forming surface 26a.

The bladder 27 is formed by a known elastic sheet body which is bag-shaped and made of a rubber composition, a synthetic resin, or the like. The bladder 27 is expanded by high-temperature, high-pressure gas or liquid being injected. Thus, the outer surface of the green tire 1a is pressed against the tire forming surface 26a.

The tire forming surface 26a includes a tread forming surface portion 29A for forming the tread surface 2a of the tread portion 2, sidewall forming surface portions 29B for forming the outer surfaces of the sidewall portions 3, and bead forming surface portions 29C for forming the outer surfaces of the bead portions 4.

In the present embodiment, in the vulcanizing step S2, the green tire 1a is expanded and vulcanized such that the stretch of the reinforcing cord 11 is gradually increased outward in the tire axial direction from the tire equator C. Thus, the tread reinforcing layer 7 is formed such that the distance Ws (shown in FIG. 3) between the reinforcing cords 11 and 11 which are adjacent to each other in the rubber-coated cord strip 10 wound in the shoulder region Sh is less than the distance Wc between the reinforcing cords 11 and 11 which are adjacent to each other in the rubber-coated cord strip 10 wound in the crown region Cr.

The tread forming surface portion 29A has substantially the same profile as the tread surface 2a. Specifically, the tread forming surface portion 29A is formed in an arc shape having a curvature radius R that is greater than that of the arc shape of the outer circumferential surface 19s of the profile deck 19 (shown in FIG. 6) on a tire radial direction line x between the outer ends 7e and 7e of the tread reinforcing layer 7. The rubber thickness of the tread portion 2 is gradually reduced from the tire equator C toward the tread end 2t, and, therefore, the stretch is gradually increased toward the tread end 2t. Thus, the distance Ws between the reinforcing cords 11 in the rubber-coated cord strip 10 is reduced toward the tread end 2t. On the tire radial direction line x, difference (R-r) between the curvature radius R of the arc of the tread forming surface portion 29A and a curvature radius r (shown in FIG. 6) of the arc of the outer circumferential surface 19s of the profile deck 19 is preferably gradually reduced outward in the tire axial direction from the tire equator C. For example, the difference (R-r) is preferably not greater than 10 mm.

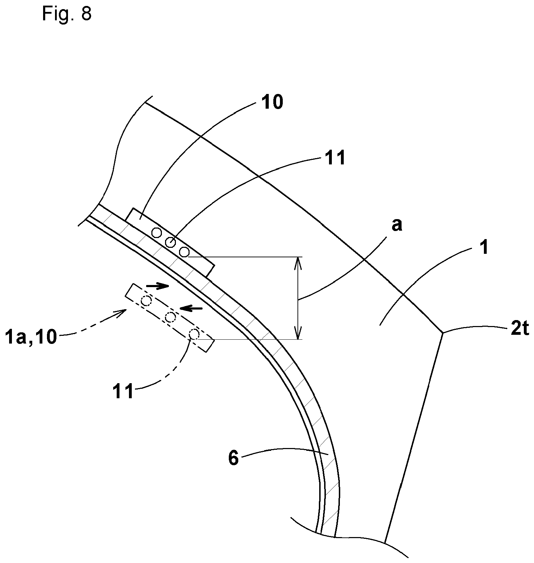

FIG. 8 is a schematic diagram illustrating a portion, near the tread end 2t, of the tire 1 having been vulcanized. As shown in FIG. 8, a distance a, in the tire radial direction, of the stretch of the reinforcing cord 11 on the outermost side, in the tire axial direction, of the tread reinforcing layer 7 having been vulcanized is preferably 0.012 times the maximum outer diameter D (shown in FIG. 6) of the profile deck 19. The maximum outer diameter D of the profile deck 19 is an outer diameter, on the tire equator C, of the profile deck 19 in a diameter-enlarged state in which the rubber-coated cord strip 10 is wound. Thus, the tire 1 in the above-described mode can be obtained.

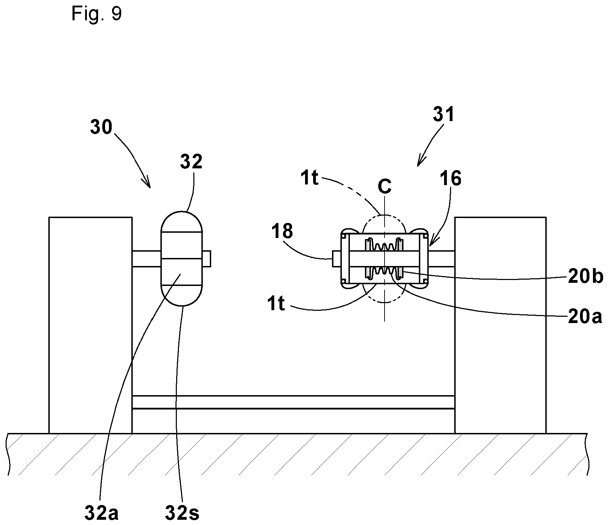

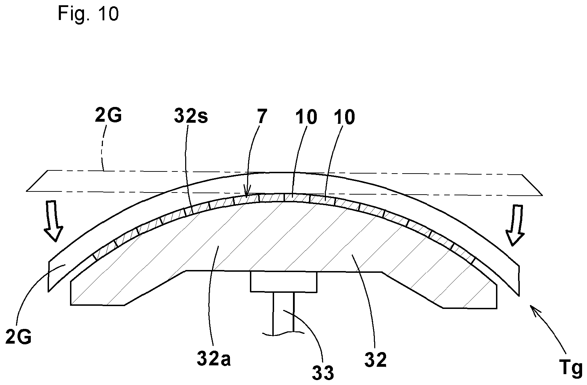

FIG. 9 is a schematic diagram illustrating a device used in the step of forming the green tire 1a according to another embodiment. As shown in FIG. 9, in the present embodiment, a tread ring forming drum 30 and a shaping drum 31 are provided. The same components as in the above-described embodiment are denoted by the same reference numerals, and the description thereof is omitted. For example, by the tread ring forming drum 30, a tread ring Tg (shown in FIG. 10) that includes the tread rubber 2G and the tread reinforcing layer 7 of the green tire 1a is formed. In the present embodiment, the green tire base body It is expanded into a toroidal shape by the shaping drum 31. In the present embodiment, the shaping drum 31 includes the holding means 16, the air bag 20a, the holding portion 20b, and the support shaft 18, and does not include the profile deck 19. For example, by the shaping drum 31, the green tire base body It is curved into an arc shape that projects outward in the tire radial direction by the air bag 20a being expanded while the green tire base body It is held.

The tread ring forming drum 30 includes a profile deck 32 that that can reduce the diameter and has a cylindrical outer circumferential surface 32s, and a driving device (not shown) for rotation-driving the profile deck 32. For example, the profile deck 32 includes a plurality of deck segments 32a that are dividable in the circumferential direction. Each deck segment 32a is held so as to be movable inward and outward in the radial direction by a diameter enlarging and reducing means 33 (shown in FIG. 10) which has a known structure using a link mechanism, a cylinder, or the like. The outer circumferential surface 32s of the profile deck 32 is formed in the same manner as the outer circumferential surface 19s of the profile deck 19 in the above-described embodiment.

FIG. 10 is a partial cross-sectional view of the profile deck 32. As shown in FIG. 10, the tread reinforcing layer 7 and the tread rubber 2G are formed on the outer circumferential surface 32s. The tread reinforcing layer 7 and the tread rubber 2G are formed in the same manner as in the above-described embodiment, and the description thereof is omitted. The tread ring Tg is moved to the shaping drum 31 by a not-illustrated transfer means having a known structure, and attached to the outer side of the green tire base body It, to form the green tire 1a (not shown).

Although the embodiments of the present invention have been described above in detail, the present invention is not limited to the above-described exemplary embodiments, and it is needless to say that various modifications can be made to implement the present invention.

### [Examples]

A motorcycle tire having the basic structure shown in FIG. 1 was produced as a sample tire according to the specifications indicated in Table 1, and each sample tire was tested for handling performance. The main specifications common to all the sample tires and a test method were as follows.
Distance Wa between reinforcing cords before vulcanization: 1.4 mm
"Per periphery length of 50 mm" in Table 1 represents the total number of reinforcing cords, in each region, indicated as the number of the reinforcing cords per periphery length of 50 mm by conversion.

### <Handling performance>

A test rider drove a test vehicle, described below, having the sample tires mounted thereto, on a test course having a dry asphalt road surface. At this time, the test rider made sensory evaluation for handling performance based on stiffness feeling during straight running and turning. The results are indicated as scores with the score of comparative example 1 being 100. The greater the value is, the better the performance is.
Tires (front wheel, rear wheel): 120/70ZR17, 190/50ZR17
Rims (front wheel, rear wheel): MT3.50, MT6.00
Tire internal pressures (front wheel, rear wheel): 250 kPa, 290 kPa
Test vehicle: motorcycle having an engine displacement of 1000 cc

**[Table 1]**

| | Comparative example 1 | Comparative example 2 | Example 1 | Example 2 | Example 3 | Example 4 |
|---|---|---|---|---|---|---|
| Ec (per periphery length of 50 mm) | 36 | 36 | 36 | 36 | 36 | 36 |
| Distance (mm) between reinforcing cords in Cr | 1.4 | 1.4 | 1.4 | 1.4 | 1.4 | 1.4 |
| Em (per periphery length of 50 mm) | 36 | 36 | 36 | 38 | 38 | 36 |
| Distance (mm) between reinforcing cords in Mi | 1.4 | 1.4 | 1.3 | 1.3 | 1.2 | 1.3 |
| Es (per periphery length of 50 mm) | 36 | 38 | 38 | 40 | 40 | 36 |
| Distance (mm) between reinforcing cords in Sh | 1.4 | 1.4 | 1.1 | 1.1 | 1.0 | 1.1 |
| Handling performance [Score The greater the value is, the better the performance is] | 100 | 102 | 110 | 115 | 120 | 105 |

The test results indicate that the tires of examples improved handling performance as compared with the tires of comparative examples.

Provided is a tire that can improve handling performance.

## Claims

1. A motorcycle tire (1) comprising:
a tread portion (2) configured to be curved into an arc shape that projects outward in a tire radial direction;
a carcass (6) having a toroidal shape; and
a tread reinforcing layer (7) disposed outward of the carcass (6) in the tire radial direction and inward of the tread portion (2) in the tire radial direction, wherein
the tread reinforcing layer (7) includes a crown region (Cr) and a pair of shoulder regions (Sh) on both outer sides of the crown region (Cr), **characterized in that** the tread reinforcing layer (7) is formed by a rubber-coated cord strip (10) being helically wound,
the rubber-coated cord strip (10) is formed by a plurality of reinforcing cords (11) aligned with each other being covered with topping rubber (G),
a distance (Ws) between the reinforcing cords (11) which are adjacent to each other in the rubber-coated cord strip (10) wound in each of the shoulder regions (Sh) is less than a distance (Wc) between the reinforcing cords (11) which are adjacent to each other in the rubber-coated cord strip (10) wound in the crown region (Cr),
shoulder ends (Es) that are the number of the reinforcing cords (11) per unit periphery length in each of the shoulder regions (Sh) are not less than crown ends (Ec) that are the number of reinforcing cords (11) per unit periphery length in the crown region (Cr),
the shoulder ends (Es) are 100% to 150% of the crown ends (Ec), and
a distance (Lc) between the rubber-coated cord strips (10) which are adjacent to each other in a tire axial direction in the crown region (Cr) is greater than a distance (Ls) between the rubber-coated cord strips (10) which are adjacent to each other in the tire axial direction in each of the shoulder regions (Sh).

2. The motorcycle tire (1) according to claim 1, wherein the shoulder ends (Es) are greater than the crown ends (Ec).

3. The motorcycle tire (1) according to claim 1 or 2, wherein a distance (La) between the rubber-coated cord strips (10) adjacent to each other is reduced outward in the tire axial direction.

4. The motorcycle tire (1) according to claim 1, wherein the shoulder ends (Es) are the same as the crown ends (Ec).

5. The motorcycle tire (1) according to any one of claims 1 to 4, wherein a distance (Wa) between the reinforcing cords (11) adjacent to each other in the rubber-coated cord strip (10) is reduced such that the closer the rubber-coated cord strip (10) is to an outer side in the tire axial direction, the less the distance (Wa) in the rubber-coated cord strip (10) becomes.

6. The motorcycle tire (1) according to any one of claims 1 to 5, wherein the distance (Ws) between the reinforcing cords (11) which are adjacent to each other in the rubber-coated cord strip (10) wound in each of the shoulder regions (Sh) is not greater than 90% of the distance (Wc) between the reinforcing cords (11) which are adjacent to each other in the rubber-coated cord strip (10) wound in the crown region (Cr).

7. The motorcycle tire (1) according to any one of claims 1 to 6, wherein the crown region (Cr) extends, across a tire equator (C) located at a center of the crown region (Cr), with a length that is 30% of a tread periphery length.

## Patentansprüche

1. Motorradreifen (1), mit:
einem Laufflächenabschnitt (2), der konfiguriert ist, in eine Bogenform gekrümmt zu werden, die in einer Reifenradialrichtung auswärts vorsteht;
einer Karkasse (6), die eine Torusform hat; und
einer Laufflächenverstärkungslage (7), die in der Reifenradialrichtung außerhalb der Karkasse (6) und in der Reifenradialrichtung innerhalb des Laufflächenabschnitts (2) angeordnet ist, wobei
die Laufflächenverstärkungslage (7) eine Kronenregion (Cr) und ein Paar Schulterregionen (Sh) auf beiden Außenseiten der Kronenregion (Cr) aufweist, **dadurch gekennzeichnet, dass**
die Laufflächenverstärkungslage (7) durch einen gummibeschichteten Kabelstreifen (10) ausgebildet ist, der wendelartig gewickelt ist,
der gummibeschichtete Kabelstreifen (10) durch eine Vielzahl von zueinander ausgerichteten Verstärkungskabeln (11) ausgebildet ist, die mit einem Deckgummi (G) bedeckt sind,
ein Abstand (Ws) zwischen den Verstärkungskabeln (11), welche in dem gummibeschichteten Kabelstreifen (10) zueinander benachbart sind, der in einer jeden der Schulterregionen (Sh) gewickelt ist, weniger ist als ein Abstand (Wc) zwischen den Verstärkungskabeln (11), welche in dem gummibeschichteten Kabelstreifen (10) zueinander benachbart sind, der in der Kronenregion (Cr) gewickelt ist,
Schulterenden (Es), die die Anzahl der Verstärkungskabel (11) pro Einheitsumfangslänge in einer jeden der Schulterregionen (Sh) sind, nicht weniger sind als Kronenenden (Ec), die die Anzahl von Verstärkungskabeln (11) pro Einheitsumfangslänge in der Kronenregion (Cr) sind,
die Schulterenden (Es) 100% bis 150% der Kronenenden (Ec) betragen und
ein Abstand (Lc) zwischen den gummibeschichteten Kabelstreifen (10), welche in einer Reifenaxialrichtung zueinander benachbart sind, in der Kronenregion (Cr) größer ist als ein Abstand (Ls) zwischen den gummibeschichteten Kabelstreifen (10), welche in der Reifenaxialrichtung zueinander benachbart sind, in einer jeden der Schulterregionen (Sh).

2. Motorradreifen (1) nach Anspruch 1, wobei die Schulterenden (Es) größer sind als die Kronenenden (Ec).

3. Motorradreifen (1) nach Anspruch 1 oder 2, wobei ein Abstand (La) zwischen den gummibeschichteten Kabelstreifen (10), die zueinander benachbart sind, auswärts in der Reifenaxialrichtung verringert ist.

4. Motorradreifen (1) nach Anspruch 1, wobei die Schulterenden (Es) gleich sind wie die Kronenenden (Ec).

5. Motorradreifen (1) nach einem der Ansprüche 1 bis 4, wobei ein Abstand (Wa) zwischen den Verstärkungskabeln (11), die in dem gummibeschichteten Kabelstreifen (10) zueinander benachbart sind, so verringert ist, dass der Abstand (Wa) in dem gummibeschichteten Kabelstreifen (10) umso geringer wird, je näher der gummibeschichtete Kabelstreifen (10) zu einer Außenseite in der Reifenaxialrichtung ist.

6. Motorradreifen (1) nach einem der Ansprüche 1 bis 5, wobei der Abstand (Ws) zwischen den Verstärkungskabeln (11), welche in dem gummibeschichteten Kabelstreifen (10) zueinander benachbart sind, der in einer jeden der Schulterregionen (Sh) gewickelt ist, nicht größer ist als 90% des Abstands (Wc) zwischen den Verstärkungskabeln (11), welche in dem gummibeschichteten Kabelstreifen (10) zueinander benachbart sind, der in der Kronenregion (Cr) gewickelt ist.

7. Motorradreifen (1) nach einem der Ansprüche 1 bis 6, wobei sich die Kronenregion (Cr) mit einer Länge, die 30% einer Laufflächenumfangslänge ist, über einen Reifenäquator (C) erstreckt, der sich an einer Mitte der Kronenregion (Cr) befindet.

## Revendications

1. Pneu de moto (1) comprenant :
une partie de bande de roulement (2) configurée pour être incurvée en forme d'arc qui fait saillie vers l'extérieur dans une direction radiale du pneu ;
une carcasse (6) ayant une forme toroïdale ; et
une couche de renforcement de bande de roulement (7) disposée vers l'extérieur de la carcasse (6) dans la direction radiale du pneu et vers l'intérieur de la partie de bande de roulement (2) dans la direction radiale du pneu, dans lequel :
la couche de renforcement de bande de roulement (7) comprend une région de sommet (Cr) et une paire de régions d'épaulement (Sh) sur les deux côtés externes de la région de sommet (Cr), **caractérisé en ce que** :
la couche de renforcement de bande de roulement (7) est formée par une bande de cordes recouvertes de caoutchouc (10) qui est enroulée de manière hélicoïdale,
la bande de cordes recouvertes de caoutchouc (10) est formée par une pluralité de cordes de renforcement (11) alignées les unes par rapport aux autres, recouvertes avec un caoutchouc de gommage (G),
une distance (Ws) entre les cordes de renforcement (11) qui sont adjacentes entre elles dans la bande de cordes recouvertes de caoutchouc (10) enroulée dans chacune des régions d'épaulement (Sh) est inférieure à une distance (Wc) entre les cordes de renforcement (11) qui sont adjacentes entre elles dans la bande de cordes recouvertes de caoutchouc (10) enroulée dans la région de sommet (Cr),
les extrémités d'épaulement (Es) qui représentent le nombre de cordes de renforcement (11) par unité de longueur périphérique dans chacune des régions d'épaulement (Sh) ne sont pas inférieures aux extrémités de sommet (Ec) qui représentent le nombre de cordes de renforcement (11) par unité de longueur périphérique dans la région de sommet (Cr),
les extrémités d'épaulement (Es) représentent de 100 % à 150 % des extrémités de sommet (Ec), et
une distance (Lc) entre les bandes de cordes recouvertes de caoutchouc (10) qui sont adjacentes entre elles dans une direction axiale du pneu dans la région de sommet (Cr) est supérieure à une distance (Ls) entre les bandes de cordes recouvertes de caoutchouc (10) qui sont adjacentes entre elles dans la direction axiale du pneu dans chacune des régions d'épaulement (Sh).

2. Pneu de moto (1) selon la revendication 1, dans lequel les extrémités d'épaulement (Es) sont supérieures aux extrémités de sommet (Ec).

3. Pneu de moto (1) selon la revendication 1 ou 2, dans lequel une distance (La) entre les bandes de cordes recouvertes de caoutchouc (10) adjacentes entre elles est réduite vers l'extérieur dans la direction axiale du pneu.

4. Pneu de moto (1) selon la revendication 1, dans lequel les extrémités d'épaulement (Es) sont les mêmes que les extrémités de sommet (Ec).

5. Pneu de moto (1) selon l'une quelconque des revendications 1 à 4, dans lequel une distance (Wa) entre les cordes de renforcement (11) adjacentes entre elles dans la bande de cordes recouvertes de caoutchouc (10) est réduite de sorte que plus la bande de cordes recouvertes de caoutchouc (10) est proche d'un côté externe dans la direction axiale du pneu, plus la distance (Wa) se réduit dans la bande de cordes recouvertes de caoutchouc (10).

6. Pneu de moto (1) selon l'une quelconque des revendications 1 à 5, dans lequel la distance (Ws) entre les cordes de renforcement (11) qui sont adjacentes entre elles dans la bande de cordes recouvertes de caoutchouc (10) enroulée dans chacune des régions d'épaulement (Sh) n'est pas supérieure à 90 % de la distance (Wc) entre les cordes de renforcement (11) qui sont adjacentes entre elles dans la bande de cordes recouvertes de caoutchouc (10) enroulée dans la région de sommet (Cr) .

7. Pneu de moto (1) selon l'une quelconque des revendications 1 à 6, dans lequel la région de sommet (Cr) s'étend, de part et d'autre d'un équateur de pneu (C) positionné au niveau d'un centre de la région de sommet (Cr), avec une longueur qui représente 30 % d'une longueur périphérique de bande de roulement.
